(19) Europäisches Patentamt

European Patent Office

Office européen des brevets

(11) **EP 1 179 550 A1**

(12) **EUROPEAN PATENT APPLICATION**
published in accordance with Art. 158(3) EPC

(43) Date of publication:
**13.02.2002 Bulletin 2002/07**

(51) Int Cl.[7]: **C08F 8/34**, H01B 1/06, H01M 8/02

(21) Application number: **01904422.1**

(22) Date of filing: **14.02.2001**

(86) International application number:
**PCT/JP01/01023**

(87) International publication number:
**WO 01/60873 (23.08.2001 Gazette 2001/34)**

(84) Designated Contracting States:
**AT BE CH CY DE DK ES FI FR GB GR IE IT LI LU MC NL PT SE TR**

(30) Priority: **16.02.2000 JP 2000037509**
**11.05.2000 JP 2000137995**

(71) Applicants:
• **IDEMITSU PETROCHEMICAL CO., LTD.**
  **Tokyo 130-0015 (JP)**
• **Tanioka, Akihiko**
  **Ohta-ku, Tokyo 145-0061 (JP)**

(72) Inventors:
• **TANIOKA, Akihiko**
  **Ohta-ku, Tokyo 145-0061 (JP)**
• **SERA, Masanori**
  **Ichihara-shi, Chiba 299-0107 (JP)**
• **TOMOTSU, Norio**
  **Ichihara-shi, Chiba 299-0107 (JP)**

(74) Representative:
**Gille Hrabal Struck Neidlein Prop Roos**
**Patentanwälte Brucknerstrasse 20**
**40593 Düsseldorf (DE)**

(54) **POLYELECTROLYTE, POLYELECTROLYTE FILM, AND FUEL CELL**

(57) There are disclosed a polyelectrolyte comprising at least a styrenic polymer having a syndiotactic configuration and exhibiting an ion exchange capability, a polyelectrolyte membrane produced by forming the polyelectrolyte into a film, and a fuel cell using the polyelectrolyte membrane. The polyelectrolyte of the present invention is inexpensive and exhibits a good long-term stability, and is suitably used for fuel cells, production of common salt from sea water and recovery of acids from waste water.

**Description**

Technical Field

The present invention relates to a polyelectrolyte, a polyelectrolyte membrane produced from the polyelectrolyte, and a fuel cell, and more particularly to an inexpensive polyelectrolyte having a good long-term stability which is suitably used in fuel cells as well as for the production of common salt from sea water and recovery of acids from waster water, a polyelectrolyte membrane produced by forming the polyelectrolyte into a film, and a fuel cell using the polyelectrolyte membrane.

Background Art

In recent years, attention has been paid to new-energy techniques in view of environmental problems. A noticeable one of the new-energy techniques is a fuel cell. The fuel cell converts a chemical energy to an electric energy by electrochemically reacting hydrogen with oxygen, and exhibits a high energy efficiency. Conventional fuel cells have been classified into phosphoric acid-type fuel cells, molten carbonate-type fuel cells, solid oxide-type fuel cells, solid polymer type fuel cells, etc., according to kinds of electrolytes used. As hydrogen sources for the fuel cells, there have been used methanol, natural gases and the like which are converted or reformed into hydrogen in the fuel cells. Among these fuel cells, the solid polymer-type fuel cells using a polyelectrolyte membrane (high-polymer ion-exchange membrane) as an electrolyte thereof, have a simple structure and are easy in maintenance, and is therefore expected to apply especially to automobiles.

Hitherto, as polyelectrolytes, there are generally known sulfonated styrene resins, sulfonic group-containing fluorocarbon resins, e.g., "NAPHION" (registered trademark) available from DuPont, or the like. The sulfonated styrene resins are copolymerized with divinylbenzene to maintain a film configuration even when moistened, and form an adequate amount of pores required for polyelectrolytes therein. However, the styrene-divinylbenzene copolymer is poor in long-term stability. This is because deterioration of the resin due to residual divinylbenzene which does not contribute to the crosslinking reaction, is caused during long-term use, which results in change in resin structure. Also, the styrene-divinylbenzene copolymer has a chemically cross-linked structure and, therefore, cannot be dissolved and melted for reuse thereof. If no divinylbenzene is used, the sulfonated product is gelled by water and can no longer retains its film configuration. On the other hand, the sulfonic group-containing fluorocarbon resins are very expensive because expensive fluorocarbon resins are used as a base resin therefor, and tend to cause environmental pollution upon disposal.

Further, the sulfonation of polystyrenes, i.e., styrenic polymers having a syndiotactic configuration (hereinafter occasionally referred to merely as "SPS" ) has been reported, for example, in "Macromolecules", vol. 27, No. 1, pp. 287-291 (1994); Vol. 27, No. 17, pp. 4774-4780 (1994); Vol. 29, No. 18, pp. 5965-5971 (1996); and Vol. 32, No. 4, pp. 1180-1188; "Polym. Prepr.", Vol. 35, No. 2, pp. 820-821 (1994); Vol.36, No. 1, pp. 289-290 (1995); Vol.36, No. 2, pp. 372-373 (1995); and Vol.37, No. 1, pp. 739-740 (1996); and the like.

However, these sulfonated SPS described in the above publications exhibit a sulfonation degree of 6.3 mol% at most which is a value measured by elemental analysis and represents an amount of the resin modified. When the sulfonated SPS are formed into an electrolyte membrane, even if all sulfonic groups contained in the resin can effectively function for the electrolyte membrane, the obtained electrolyte membrane only shows an ion exchange capacity as small as about 0.6 (milli-equivalent/g) which is extremely low in electrolytic performance. Actually, since all of the sulfonic groups contained in the resin cannot function for the electrolyte membrane, the ion exchange capacity of the electrolyte membrane is much lower than 0.6 (milli-equivalent/g). Therefore, the electrolyte membranes obtained from the sulfonated SPS have problems such as extremely low electrolytic performance.

Also, in the above publications, although the sulfonated SPS has been reported, it is not described that the syndiotactic polystyrene is effective for the production of electrolyte membranes, especially those used in fuel cells.

Further, Japanese Patent Application Laid-open No. 5-320250 discloses chemically modified SPS, i.e., sulfonated SPS, but does not specify the use of the SPS in Examples. Thus, in Japanese Patent Application Laid-open No. 5-320250, there is no description that the SPS is useful as electrolyte membrane, especially those for fuel cells.

Disclosure of Invention

A first object of the present invention is to provide an inexpensive polyelectrolyte having a good long-term stability which is suitably used for fuel cells or the like.

A second object of the present invention is to provide a polyelectrolyte membrane obtained by forming the above polyelectrolyte into a film. A third object of the present invention is to provide a fuel cell using the above polyelectrolyte membrane therein.

As a result of extensive studies for accomplishing the above objects, the inventors have found that the use of SPS as a resin for polyelectrolyte enables the resin to show a good crystallizability so that pores required for polyelectrolyte are effectively formed in the resin, and further a membrane produced from the resin can retain its film configuration even when immersed in water by introducing ion exchange groups into the resin. In addition, it has been found that the use of the SPS which is more inexpensive than fluorocarbon resins, results in enhanced chemical resistance and heat resistance, and that a polyelectrolyte membrane produced from the polyelectrolyte exhibits a good electric conductivity and a low water-permeability, and are suitably used for fuel cells.

Further, it has been found that although the sulfonation degree of SPS is not increased by sulfonating the SPS by the conventional methods as described in the above reports, the sulfonation degree of whole system can be increased by blending the SPS with a resin which is more readily sulfonated than the SPS, and that although a membrane produced from a single resin having a high sulfonation degree is undesirably swelled when immersed in water, such a membrane produced from a resin composition containing SPS having a low sulfonation degree can retain its configuration owing to good crystallizability of the SPS even if the whole system has a high sulfonation degree.

The present invention has been accomplished based on these findings.

Thus, the present invention provides:

(1) A polyelectrolyte comprising at least a styrenic polymer having a syndiotactic configuration, and exhibiting an ion exchange capability;
(2) A polyelectrolyte membrane obtained by forming the above polyelectrolyte into a film; and
(3) A fuel cell using the above polyelectrolyte membrane.

Best Mode for Carrying out the Invention

The polyelectrolyte of the present invention contains a styrenic polymer having a syndiotactic configuration, and shows an ion exchange capability.

The syndiotactic configuration of the styrenic polymer contained in the polyelectrolyte means that the stereochemical structure has a highly syndiotactic configuration. In other words, phenyl groups or substituted phenyl groups as side chains are alternately placed at the opposite positions with respect to the main chain constituted by carbon-carbon bonds. The tacticity in the stereochemical structure is quantitated by the measurement of the nuclear magnetic resonance using an isotope of carbon ($^{13}$C-NMR). The tacticity measured by the $^{13}$C-NMR method can show the content of a sequence in which a specific number of the constituting units are bonded in sequence, such as a diad in which two constituting units are bonded in sequence, a triad in which three constituting units are bonded in sequence, and a pentad in which five constituting units are bonded in sequence. Examples of the styrenic polymers having a syndiotactic configuration according to the present invention, include polystyrene, poly(alkylstyrene), poly(halogenated styrene), poly(halogenated alkylstyrene), poly(alkoxystyrene), poly(vinylbenzoic acid ester), a hydrogenated product of these polymers, a mixture of these polymers, or a copolymer containing constituting units of these polymers as the main components, which generally has a syndiotacticity of 75% or more, preferably 85% or more, expressed in terms of the content of the racemic diad, or 30% or more, preferably 50% or more, expressed in terms of the content of the racemic pentad. As the poly(alkylstyrene), there may be used poly(methylstyrene), poly(ethylstyrene), poly(isopropylstyrene), poly(tertiary-butylstyrene), poly(phenylstyrene), poly(vinylnaphthalene), poly(vinylstyrene) and the like. As the poly(halogenated styrene), there may be used poly(chlorostyrene), poly(bromostyrene), poly(fluorostyrene) and the like. As the poly(halogenated alkylstyrene), there may be used poly(chloromethylstyrene) and the like. As the poly(alkoxystyrene), there may be used poly(methoxystyrene), poly(ethoxystyrene) and the like.

Of these styrenic polymers, especially preferred are polystyrene, poly(p-methylstyrene), poly(m-methylstyrene), poly(p-tertiary-butylstyrene), poly(p-chlorostyrene), poly(m-chlorostyrene), poly(p-fluorostyrene), hydrogenated polystyrene and copolymers containing these constituting units.

The molecular weight of these styrenic polymers is not particularly restricted. The weight-average molecular weight of the styrenic polymers is preferably 10,000 or higher, more preferably 50,000 or higher. The molecular weight distribution of the styrenic polymers is also not particularly restricted, and styrenic polymers having various narrow or broad molecular weight distributions may be used in the present invention. When the weight-average molecular weight of the styrenic polymers is less than 10,000, the resultant polyelectrolyte membrane tends to be deteriorated in thermal properties and mechanical properties.

The styrenic polymers having a syndiotactic configuration can be produced, for example, by polymerizing styrenic monomers (monomers corresponding to various styrenic polymers described above) in an inert hydrocarbon solvent or in the absence of any solvent using a catalyst composed of a titanium compound and a condensed product of water and trialkyl aluminum (Japanese Patent Application Laid-open No. 62-187708). Also, the above poly(halogenated alkylstyrene) can be produced by the method described in Japanese Patent Application Laid-open No. 1-46912, and the above hydrogenated polymers can be produced by the method described in Japanese Patent Application Laid-open No. 1-178505, etc.

The polyelectrolyte of the present invention contains the above styrenic polymer having a syndiotactic configuration (SPS) as an essential component. The SPS may or may not contain ion exchange groups therein. Accordingly, the polyelectrolyte of the present invention may be classified into the following two types, i.e., (1) those polyelectrolytes comprising an ion-exchange group-containing thermoplastic resin other than SPS, an ion-exchange group-free SPS and, if required, the other ion-exchange group-free thermoplastic resin; and (2) those polyelectrolytes comprising a thermoplastic resin containing at least an ion-exchange group-containing SPS and, if required, an ion-exchange group-free thermoplastic resin. As the thermoplastic resins other than SPS used in the polyelectrolytes (1) and (2), there may be used any suitable thermoplastic resins without particular limitations. Examples of the thermoplastic resins other than SPS include styrenic polymers such as atactic polystyrene, isotactic polystyrene, AS resins and ABS resins; polyesters such as PET (polyethylene terephthalate); polyethers such as PC (polycarbonates), PPO (polyphenylene ether), polysulfones and polyether sulfones; condensation polymers such as polyamides, PPS (polyphenylene sulfides) and polyoxymethylene; acrylic polymers such as polyacrylic acid, polyacrylic acid esters and polymethylmethacrylate; polyolefins such as polyethylene, polypropylene and polybutene; polyfluoroolefins such as polytetrafluoroethylene, ethylene-tetrafluoroethylene copolymers and tetrafluoroethylene-hexafluoropropylene copolymers; halogen-containing vinyl compound polymers such as polyvinyl chloride and polyvinylidene chloride; and elastomers capable of showing a rubber elasticity at room temperature (rubbers). Specific examples of the elastomers include styrenic rubbers such as SEBS, SEPS, SBR and ABS rubbers, natural rubbers, polybutadiene, polyisoprene, polyisobutylene, neoprene, acrylic rubbers, urethane rubbers, silicone rubbers, polyether ester rubbers, polyester ester rubbers, and olefin-based rubbers (elastomers). More specifically, as the olefin-based rubbers, there may be used copolymer rubbers obtained by copolymerizing ethylene with $\alpha$-olefin, aromatic vinyl or diene, such as ethylene-propylene copolymer rubbers, ethylene-propylene-diene copolymer rubbers, ethylene-butene copolymer rubbers, ethylene-hexene copolymer rubbers, ethylene-octene copolymer rubbers and ethylene-styrene copolymer rubbers.

The amount of the thermoplastic resin other than SPS blended is not particularly restricted, and is usually 0.1% by weight or higher, preferably 3 to 90% by weight, more preferably 5 to 75% by weight. The ion exchange capacity of the obtained polyelectrolyte membrane is influenced by the thermoplastic resin other than SPS blended. Therefore, the amount of the thermoplastic resin other than SPS blended should be controlled such that the ion exchange capacity of the obtained polyelectrolyte membrane is preferably 0.65 milli-equivalent/g or higher, more preferably 1.0 to 3.0 milli-equivalent/g on the basis of weight of dried membrane. As far as the ion exchange capacity of the obtained polyelectrolyte membrane lies within the above-specified range, it is possible to obtain a polyelectrolyte membrane having a low resistance and a high strength. In the polyelectrolyte of the type (1), the ion-exchange group-containing thermoplastic resins other than SPS may be used alone or in combination of any two or more thereof. Of these ion-exchange group-containing thermoplastic resins other than SPS, especially preferred are ion-exchange group-containing atactic polystyrenes. Also, the ion-exchange group-free thermoplastic resins other than SPS optionally blended, may be used alone or in combination of any two or more thereof.

In the polyelectrolyte of the type (2), as the thermoplastic resins containing at least an ion-exchange group-containing SPS, there may be used (a) the ion-exchange group-containing SPS solely, (b) a mixture of the ion-exchange group-containing SPS and the ion exchange group-free thermoplastic resin, (c) a mixture of the ion-exchange group-containing SPS and the ion-exchange group-containing thermoplastic resin other than SPS, and (d) a mixture of the ion-exchange group-containing SPS, the ion-exchange group-containing thermoplastic resin other than SPS and the ion exchange group-free thermoplastic resin.

As the ion exchange group-free thermoplastic resins contained in the above compositions (b) and (d), there may be used one resin selected from the group consisting of the above thermoplastic resins and SPS, or combinations of any two or more thereof. In addition, as the ion exchange group-containing thermoplastic resins other than SPS contained in the above compositions (c) and (d), there may be used the same resins as described above in the polyelectrolyte of the type (1).

In the present invention, the ion exchange groups introduced into SPS or the thermoplastic resins other than SPS may be either cation exchange groups or anion exchange groups. Examples of the ion exchange groups include sulfonic group, carboxyl group, phosphoric group, quaternary ammonium salt group, primary, secondary or tertiary amine group, or the like. Of these ion exchange groups, preferred is the sulfonic group.

The method of introducing the ion exchange groups into SPS or the thermoplastic resins other than SPS is not particularly restricted, and any known suitable methods may be used therefor. For example, the ion exchange groups may be introduced into SPS or the thermoplastic resins other than SPS by heating the polymer in concentrated sulfuric acid, or by reacting the polymer with chlorosulfonic acid.

When the polyelectrolyte of the present invention has a basic skeleton composed of styrenic monomers solely (for example, SPS, a blended mixture of SPS and isotactic polystyrene, or the like), the amount of the ion exchange groups introduced thereinto is preferably 7.0 mol% or higher, more preferably 9.0 to 80 mol%, most preferably 11.0 to 50 mol%.

When the amount of the ion exchange groups introduced is less than 7.0 mol%, the resultant polyelectrolyte membrane may fail to show the aimed ion exchange capacity. Since the polyelectrolyte of the present invention contains the SPS as an essential component, it becomes possible to introduce the ion exchange groups into the polyelectrolyte, allow the resultant membrane to maintain its film configuration when immersed in water, and effectively form pores required for polyelectrolyte in the resin. The content of the SPS in the polyelectrolyte is preferably 0.1% by weight or higher. When the SPS content is less than 0.1% by weight, the resultant polyelectrolyte membrane tends to fail to maintain its film configuration when immersed in water, and further pores required for polyelectrolyte are unlikely to be effectively formed in the resin. The SPS content is preferably 10 to 90% by weight, more preferably 15 to 75% by weight.

The polyelectrolyte of the present invention may contain, if required, various additives ordinarily used in conventional polyelectrolytes, for example, such as plasticizers, stabilizers and mold release agents unless the addition thereof adversely affects the aimed effects of the present invention.

Further, the polyelectrolyte of the present invention may contain inorganic materials such as metal catalysts and metal oxides in order to enhance electrolytic performance thereof. The metal catalysts usable in the present invention are not particularly restricted. Examples of the metal catalysts include platinum, gold, palladium, rhodium, iridium, ruthenium or the like. These metal catalysts may be blended alone or in the form of a mixture of any two or more thereof. The amount of the metal catalysts blended is not particularly restricted, and is preferably in the range of 0.01 to 80% by weight based on the weight of the polyelectrolyte.

The metal oxides usable in the present invention are not particularly restricted. Examples of the metal oxides include silica ($SiO_2$), titania ($TiO_2$), alumina ($Al_2O_3$), zirconia ($ZrO_2$), magnesia ($MgO$), tin oxide ($SnO_2$), yttria ($Y_2O_3$) or the like. The amount of the metal oxides blended is not particularly restricted, and is preferably in the range of 0.01 to 50% by weight based on the weight of the polyelectrolyte.

As the suitable inorganic materials, there may be used those containing as one constituent, at least one metal oxide selected from the above-exemplified metal oxides. Examples of such inorganic materials include silica gel, synthetic zeolite, alumina gel, titania gel, zirconia gel, yttria gel, etc. These inorganic materials may be used alone or in the form of a mixture of any two or more thereof.

The shape of the metal oxides is not particularly restricted, and the metal oxides may be in the from of fine particles or fibers. Further, the metal oxides may also be in the form of inorganic porous particles having numerous pores present from the surface to the inside thereof.

The polyelectrolyte of the present invention can be suitably applied to fuel cells as well as redox flow batteries, production of common salt from sea water, water treatment, recovery of acids or valuable substances from waste water, production of sodium hydroxide by electrolysis, or the like.

The polyelectrolyte membrane of the present invention is produced by forming the above polyelectrolyte into a film. The method of forming the polyelectrolyte into a film is not particularly restricted. For example, the polyelectrolyte membrane is preferably produced by a solution-casting method in which the polyelectrolyte kept in a solution state is cast over a substrate to form a film, or by a melt-press or melt-extrusion method in which the molten polyelectrolyte is press-molded or extrusion-molded into a film. Alternatively, the polyelectrolyte membrane may be produced by the method in which the molten polyelectrolyte is formed into a film, and then the obtained film is subjected to stretching, heat treatment and/or solvent treatment; the method in which a film obtained from a molten thermoplastic resin is stretched and then impregnated with a polyelectrolyte-containing solution, followed by removing the solvent from the impregnated film; or the method in which ion exchange groups are directly introduced into a chemically treated membrane containing at least SPS.

In the solution-casting method, the polyelectrolyte membrane may be produced, for example, by cast-coating a substrate, e.g., a glass plate, a metal plate such as a stainless steel plate or a resin sheet such as Teflon sheet and polyimide sheet, with a solution prepared by dissolving the polyelectrolyte in an adequate solvent, and then removing the solvent from the resultant film. The substrate used in the solution-casting method is not particularly restricted, and may have a smooth surface or irregularities on its surface.

The solvent used in the solution-casting method is not particularly restricted as long as the polyelectrolyte of the present invention is dissolved therein, and then the solvent is removable therefrom. The solvent preferably has a solubility parameter (SP) of 7 to 10 $(cal/cm^3)^{1/2}$. Examples of such solvents include aromatic compounds such as benzene, toluene, xylene, ethylbenzene, chlorobenzene, bromobenzene, dichlorobenzene (including ortho-, meta- or para-isomers) and trichlorobenzene such as 1,2,4-trichlorobenzene; or non-aromatic compounds such as decalin (including cis- and trans-isomers), methylenechloride, chloroform, carbon tetrachloride, acetone, diethyl ketone, methyl ethyl ketone or the like. These solvent may be used alone or in the form of a mixture of any two or more thereof. The amount of the solvent used is not particularly restricted as long as the polyelectrolyte of the present invention can be dissolved therein.

The dissolving temperature varies depending upon composition of polyelectrolyte, kind of solvent used and the like. When 1,1,2,2-tetrachloroethane is used as the solvent, the dissolving temperature is 50°C or higher, preferably 60°C or higher, more preferably 70°C or higher.

The concentration of the polyelectrolyte-containing solution used in the solution-casting method is not particularly restricted, and is preferably in the range of 1 to 75% by weight, more preferably 3 to 50% by weight in terms of concentration of the polyelectrolyte. When the concentration of the polyelectrolyte-containing solution is out of the above-specified range, the resultant polyelectrolyte membrane tends to fail to exhibit the aimed ion exchange capacity.

The heat-treating temperature upon removal of the solvent varies depending upon kind of solvent used, etc., and is preferably in the range of -50 to 200°C. When the heat treating temperature is out of the above-specified range, the resultant polyelectrolyte membrane tends to fail to show the aimed properties. The removal of the solvent may be carried out under vacuum or by allowing the membrane to stand in a gas flow

The polyelectrolyte membrane of the present invention preferably has an ion exchange capacity of 0.65 milli-equivalent/g or higher, more preferably 1.0 to 3.0 milli-equivalent/g, most preferably 1.3 to 2.5 milli-equivalent/g on the basis of weight of dried membrane. When the ion exchange capacity lies within the above-specified range, the resultant polyelectrolyte membrane can exhibit a low resistance and a high strength.

The thickness of the polyelectrolyte membrane is not particularly restricted, and is preferably 5 to 1,000 μm, more preferably 10 to 200 μm. When the thickness of the polyelectrolyte membrane is less than 5 μm, the polyelectrolyte membrane tends to fail to show a practically usable strength. When the thickness of the polyelectrolyte membrane is more than 1,000 μm, the resistance of the polyelectrolyte membrane tends to become too large, resulting in deteriorated power generation performance of fuel cells obtained therefrom. The membrane thickness may be controlled by adjusting the concentration of the polyelectrolyte-containing solution or the thickness of the cast-coating film formed on the substrate in the case of the solution-casting method, and by adjusting the spacer thickness, the die gap, the taking-off speed, etc., in the case of the melt-press or melt-extrusion method. The polyelectrolyte membrane may be reinforced with a woven fabric, etc., if required.

The fuel cell is a device for continuously generating an electric power or energy by continuously replenishing a fuel such as hydrogen and oxygen or air and simultaneously continuously discharging the reaction product composed mainly of water therefrom. As the hydrogen source, there may be used hydrogen itself as well as hydrogen derived from various hydrocarbon-based fuels such as natural gas, methane, alcohol and the like.

Also, the fuel cell generally comprises electrodes, electrolyte, fuel feed device, product discharge device, etc. The electrodes contain electrode active materials.

As the electrolyte, there may be used a polyelectrolyte membrane which is required to have a good electric conductivity. In solid polymer-type fuel cells using the polyelectrolyte membrane, it is important to adequately control the water content of the polyelectrolyte membrane. Specifically, the polyelectrolyte membrane preferably has a low water permeability. In particular, in the case of direct methanol-type fuel cells, the polyelectrolyte membrane is required to show a low methanol permeability. Further, it is required that the polyelectrolyte membrane exhibits a good chemical stability and a high heat resistance.

The fuel cell of the present invention comprises the above polyelectrolyte membrane as an electrolyte. The polyelectrolyte membrane of the present invention can satisfy a good electric conductivity and a low water permeability (i.e., a high water-shielding property). By appropriately selecting the film-forming conditions, it is possible to control the water permeability of the polyelectrolyte membrane. Such a polyelectrolyte membrane having a low water permeability may be suitably used for the direct methanol-type fuel cells. Further, since the SPS-containing polyelectrolyte is excellent in chemical resistance and heat resistance, the polyelectrolyte membrane produced therefrom can be suitably used for fuel cells.

The electrode active materials used in the fuel cells are not particularly restricted, and any known active materials used in conventional polyelectrolyte-type fuel cells may be used in the fuel cell of the present invention. Examples of the electrode active materials include platinum catalysts, platinum-ruthenium catalysts or those prepared by supporting these catalysts on a carrier. The method of bonding the polyelectrolyte membrane onto the electrode is not particularly restricted, and any known suitable methods may be used therefor. For example, there may be used the chemical plating method described in "Electrochemistry and Industrial Physical Chemistry", Vol. 53, p. 261 (1985), the heat press bonding method for gas diffusion electrode described in "J. Electrochemical Society, Electrochemical Science and Technology", Vol. 135, p. 2209 (1988), or the like.

The present invention will be described in more detail with reference to the following examples. However, it should be noted that the following examples are only illustrative and not intended to restrict the scope of the present invention thereto.

Example 1

2.1 g of atactic polystyrene having a number-average molecular weight of 120,000 was dissolved in 27 ml of 1,2,4-trichlorobenzene at room temperature. Then, 1.0 ml of concentrated sulfuric acid was added to the solution, and the resultant mixture was stirred for one hour. Thereafter, the mixture was mixed with 2.1 g of syndiotactic polystyrene (weight-average molecular weight: 190,000; ratio of weight-average molecular weight to number-average molecular weight (Mw/Mn ratio): 1.9; syndiotactic polystyrene (neat polymer) available from Idemitsu Petrochemical Co., Ltd.), and the obtained mixture was refluxed under heating at 150°C to dissolve solids in the solvent. Then, a glass plate was cast-coated with the solution, and then air-dried under room temperature for 24 hours to form a coating film on the glass plate. The resultant coating film was separated from the glass plate in water to obtain a membrane having a thickness of 120 µm. The thus obtained membrane was stored in ion-exchanged water.

When the obtained membrane was measured by the following methods, it was confirmed that the water content of the membrane was 61.9%, and the ion exchange capacity thereof was 1.54 milli-equivalent/g.

Measurement of Water Content:

The membrane was immersed in ion-exchanged water for 24 hours or longer. Then, after water attached on the surface of the membrane was wiped off, the weight $W_1$ (g) of the membrane was measured. Further, the membrane was dried at 120°C for 4 hours, and the weight $W_2$ (g) thereof was measured. The water content C (%) of the membrane was calculated from the following formula:

$$C\ (\%) = [(W_1 - W_2)/W_1] \times 100$$

Measurement of Ion Exchange Capacity:

The membrane was immersed in a 1.0mol/liter hydrochloric acid aqueous solution for 24 hours. Then, the membrane was taken out of the solution, washed with ion-exchanged water, and then immersed in ion-exchanged water for 30 minutes. After the washing and immersing procedures were repeated three times, the membrane was immersed in ion-exchanged water for 24 hours. Then, water attached onto the surface of the membrane was wiped off, and the wet weight W (g) of the membrane was measured. The membrane was placed in 150 ml of a 3.0mol/liter potassium chloride aqueous solution, and titrated with a 0.1mol/liter potassium hydroxide aqueous solution. From the measured volume V (liter) of the potassium hydroxide aqueous solution required for the neutralization titration, the ion exchange capacity (E) of the membrane was calculated according to the following formula:

$$E\ (milli\text{-}equivalent/g) = 0.1 \times V/[W \times (1 - C/100)]$$

Examples 2 and 3

The atactic polystyrene used in Example 1 was added in an amount shown in Table 1 to 60 ml of 1,2,4-trichlorobenzene, and the resultant mixture was heated to 60°C to completely dissolve solids in the solvent. 3.0 ml of concentrated sulfuric acid was added to the obtained solution, and the solution was stirred for one hour. Then, the syndiotactic polystyrene used in Example 1 was added in an amount shown in Table 1 to the solution, and the resultant mixture was stirred under heating at 150°C for 14 hours.

Then, a glass plate was cast-coated with the obtained solution, and allowed to stand in an oven at 40°C for 48 hours. After drying, the coated glass plate was immersed in methanol at 40°C to separate the coating film from the glass plate. The thus obtained membrane was sufficiently washed with ion-exchanged water, and stored in ion-exchanged water. The water content and the ion exchange capacity of the obtained membrane were measured in the same manner as in Example 1. The results are shown in Table 2. Further, in Example 3, the water permeability and electric conductivity of the obtained membrane were measured by the following methods. The results are also shown in Table 2.

Measurement of Water Permeability:

The membrane was immersed in a 1.0mol/liter hydrochloric acid aqueous solution for 24 hours. Thereafter, the membrane was taken out of the solution to wash the surface thereof with ion-exchanged water, and then immersed in ion-exchanged water for 24 hours. The membrane was interposed between water-permeability measuring cells which then were each filled with an equiamount of ion-exchanged water to keep the membrane under hydrostatic pressure. A hydrostatic pressure of 77 g/cm$^2$ was applied to one of the cells to measure the amount of ion-exchanged water discharged from the other cell per unit time. The water permeability (g/h) of the membrane was obtained from the thus-measured amount. The area of the portion of the membrane through which water was penetrated, was 4.9 cm$^2$.

Measurement of Electric Conductivity of Membrane:

The membrane was immersed in a 1.0mol/liter hydrochloric acid aqueous solution for 24 hours. Thereafter, the membrane was taken out of the solution to wash the surface thereof with ion-exchanged water, and then immersed in ion-exchanged water for 24 hours. Thereafter, the membrane was further immersed in 0.5mol/liter hydrochloric acid aqueous solution for 24 hours. The membrane was interposed between cells which then were each filled with the 0.5mol/liter hydrochloric acid aqueous solution to conduct an AC impedance measurement thereof using an impedance analyzer 4192A available from Hewlett Packard Corp., to measure the membrane resistance value. The electric conductivity (mS/cm) of the membrane was obtained from the thus-measured membrane resistance. The frequency range used in the measurement was from 10 kHz to 10 mHz, and the membrane area measured was 4.9 cm$^2$. Further, platinum black electrodes each having a diameter of 2 cm$^2$ were used as electrodes, and the distance between the electrodes was set to 6 mm.

Table 1

|  | Example 2 | Example 3 |
|---|---|---|
| Atactic polystyrene (g) | 3.12 | 4.37 |
| Syndiotactic polystyrene (g) | 3.12 | 1.87 |

Example 4

The membrane was prepared in the same manner as in Example 2, except that 1.87 g of the atactic polystyrene and 4.37 g of the syndiotactic polystyrene were used. It was confirmed that the obtained membrane had a water content of 73.0%.

Comparative Example 1

The same procedure as in Example 1 was repeated except that no syndiotactic polystyrene was used. As a result, it was confirmed that the obtained membrane was gelled during the storage in water, and could not maintain its film configuration.

Comparative Example 2

A commercially available woven fabric-reinforced styrenedivinylbenzene-based ion exchange membrane was measured in the same manner as in Example 2. The results are shown in Table 2.

Table 2

|  | Example 2 | Example 3 | Comparative Example 2 |
|---|---|---|---|
| Membrane thickness (μm) | 110 | 100 | 220 |
| Water content (%) | 66.5 | 64.2 | 24.4 |
| Ion exchange capacity (milli-equivalent/g) | 1.54 | 2.03 | 1.55 |
| Water permeability (g/h) | - | 0.07 | 0.12 |
| Electric        conductivity (mS/cm) | - | 73.1 | 59.4 |

Examples 5 and 6

An atactic polystyrene shown in Table 3 was added in an amount shown in Table 3 to 60 ml of 1,2,4-trichlorobenzene, and the resultant mixture was heated to 60°C to completely dissolve solids in the solvent. The obtained solution was mixed with 2.2 ml of concentrated sulfuric acid, and stirred for one hour. Then, a syndiotactic polystyrene shown in Table 3 was added in an amount shown in Table 3 to the solution, and stirred under heating at a temperature shown in Table 3 for 14 hours.

Next, a Teflon plate was cast-coated with the obtained solution, and allowed to stand in an oven at 110°C for 48 hours. After drying, the coated plate was immersed in water to separate the coating film from the Teflon plate. The thus obtained membrane was sufficiently washed with ion-exchanged water, and stored in ion-exchanged water. The potential of the obtained membrane was measured by the following method. The results are shown in Table 4.

Meanwhile, the membrane obtained in Example 6 was measured using an ICP emission spectrometer to determine an sulfur content in the membrane. The sulfonation degree of the resin was obtained from the thus determined sulfur content. The results are shown in Table 3.

Measurement of Membrane Potential:

A salt bridge was used in order to allow the whole potential difference to be identical to the membrane potential. The membrane was interposed between two cells. While maintaining the concentration of a KCl aqueous solution filled in the cell 1 at $10^{-3}$ mol/liter, the concentration of a KCl aqueous solution filled in the cell 2 was varied from $10^{-3}$ mol/liter to 2 mol/liter to measure the potential generated. The membrane area was 0.8 cm$^2$, and silver chloride electrodes and salt bridge were used as electrodes.

Table 3

|  | Atactic polystyrene | | Syndiotactic polystyrene* | |
|---|---|---|---|---|
|  | Weight-average molecular weight | Amount added (g) | Weight-average molecular weight | Amount added (g) |
| Example 5 | $30 \times 10^4$ | 6.36 | $19 \times 10^4$ | 4.24 |
| Example 6 | $30 \times 10^4$ | 8.48 | $34 \times 10^4$ | 2.12 |

Note*: The syndiotactic polystyrene used in Example 5 was the same as that used in Example 1.

Table 3 (continued)

|  | Solution-stirring temperature (°C) | Ion exchange capacity (milli-equivalent/g) | Sulfonation degree of resin (mol%) |
|---|---|---|---|
| Example 5 | 135 | 1.67 | - |
| Example 6 | 150 | 1.75 | 23.8 |

Table 4

| | | KCl concentration of cell 2 (mol/liter) | | | | | |
|---|---|---|---|---|---|---|---|
| | | 0.01 | 0.1 | 0.3 | 0.6 | 1.0 | 2.0 |
| Membrane potential (mV) | Example 5 | 58 | 108 | 118 | 119 | 114 | 103 |
| | Example 6 | 56 | 109 | 124 | 125 | 122 | 114 |

Example 7

1.8 g of the syndiotactic polystyrene used in Example 1 and 4.2 g of poly(2,6-dimethyl-1,4-phenylene ether) having a weight-average molecular weight of 50,000 in terms of polystyrene as measured by GPC, were added to 60 ml of 1,2,4-trichlorobenzene, and the mixture was heated to 140°C to completely dissolve solids in the solvent. A glass plate was cast-coated with the thus obtained solution, and then the coated glass plate was allowed to stand in an oven at 70°C for 24 hours.
Next, the coated glass plate was immersed in methanol to separate the coating film from the glass plate. The obtained membrane was sufficiently washed with ion-exchanged water. After drying, the membrane was immersed in concentrated sulfuric acid bath at room temperature for 24 hours. Then, the membrane was sufficiently washed with ion-exchanged water, and stored in ion-exchanged water. Further, the membrane was subjected to measurement of the membrane potential. As a result, it was confirmed that when the KCl concentration in the cell 2 was 0.1 mol/liter, the membrane potential was 62 mV.

Example 8

A syndiotactic polystyrene (weight-average molecular weight: 340,000; ratio of weight-average molecular weight to number-average molecular weight (Mw/Mn ratio): 2.0; syndiotactic polystyrene (neat polymer) available from Idemitsu Petrochemical Co., Ltd.) was added in an amount shown in Table 5 to 60 ml of tetrachloroethane, and the obtained mixture was stirred at 70°C for 2 hours to completely dissolve solids in the solvent. Then, a concentrated sulfuric acid was added in an amount shown in Table 5 to the solution, and the resultant mixture was reacted at 70°C for 6 hours.

Next, a glass plate was cast-coated with the obtained solution. The coated glass plate was dried at 40°C for 60 hours, and then immersed in methanol to separate the cast-coating film from the glass plate.

Thereafter, the membrane was stored in ion-exchanged water. It was confirmed that the membrane had an ion exchange capacity of 1.01 milli-equivalent/g on the basis of weight of dried membrane.

The results of the membrane potential measurement are shown in Table 6. Also, the membrane was measured by the same method as described above to determine its sulfur content. The sulfonation degree of the membrane was obtained from the measured sulfur content. The results are shown in Table 5.

Example 9

A syndiotactic polystyrene (weight-average molecular weight: 340,000; ratio of weight-average molecular weight to number-average molecular weight (Mw/Mn ratio): 2.0; syndiotactic polystyrene (neat polymer) available from Idemitsu Petrochemical Co., Ltd.) was added in an amount shown in Table 5 to 60 ml of tetrachloroethane, and the obtained mixture was stirred at 70°C for 2 hours to completely dissolve solids in the solvent. Then, a concentrated sulfuric acid was added in an amount shown in Table 5 to the solution, and the resultant mixture was reacted at 70°C for 6 hours. Then, poly(2,6-dimethyl-1,4-phenylene ether) having a weight-average molecular weight of 50,000 in terms of polystyrene as measured by GPC, was added in an amount shown in Table 5 to the reaction solution, and the resultant mixture was stirred at 70°C for 2 hours.

Next, a glass plate was cast-coated with the obtained solution. The coated glass plate was dried at 40°C for 60 hours, and then immersed in methanol to separate the coating film from the glass plate.

Thereafter, the obtained membrane was stored in ion-exchanged water. It was confirmed that the membrane had an ion exchange capacity of 0.66 milli-equivalent/g on the basis of weight of dried membrane.

The results of the membrane potential measurement are shown in Table 6.

Table 5

|  | Amount of syndiotactic polystyrene added (g) | Amount of poly (2,6-dimethyl-1,4-phenylene ether) added (g) | Amount of concentrated sulfuric acid (ml) | Sulfonation degree of resin (mol%) |
|---|---|---|---|---|
| Example 8 | 6.24 | - | 1.5 | 14.4 |
| Example 9 | 5.00 | 1.25 | 1.2 | - |

Table 6

|  |  | KCl concentration of cell 2 (mol/liter) | | | | | |
|---|---|---|---|---|---|---|---|
|  |  | 0.01 | 0.03 | 0.05 | 0.1 | 0.3 | 0.5 |
| Membrane potential (mV) | Example 8 | 54 | 66 | 67 | 62 | 44 | 38 |
|  | Example 9 | 46 | 48 | 42 | 37 | - | - |

Industrial Applicability

The polyelectrolyte of the present invention exhibits a good retention of film configuration in water and a good long-term stability, and is inexpensive. The polyelectrolyte is suitably used for fuel cells, production of common salt from sea water and recovery of acids from waster water. The polyelectrolyte membrane produced from the polyelectrolyte is suitable as an electrolyte for solid polymer-type fuel cells.

**Claims**

1.   A polyelectrolyte comprising at least a styrenic polymer having a syndiotactic configuration, and exhibiting an ion exchange capability.

2. The polyelectrolyte according to claim 1, wherein said polyelectrolyte comprises an ion-exchange group-containing thermoplastic resin other than said styrenic polymer having a syndiotactic configuration, and an ion-exchange group-free polystyrenes having a syndiotactic configuration.

3. The polyelectrolyte according to claim 2, further comprising an ion exchange group-free other thermoplastic resin.

4. The polyelectrolyte according to claim 1, wherein said polyelectrolyte comprises a thermoplastic resin containing at least an ion-exchange group-containing styrenic polymer having a syndiotactic configuration.

5. The polyelectrolyte according to claim 4, wherein said polyelectrolyte comprises an ion-exchange group-containing styrenic polymer having a syndiotactic configuration, and an ion-exchange group-free thermoplastic resin.

6. The polyelectrolyte according to claim 4, wherein said polyelectrolyte comprises an ion-exchange group-containing styrenic polymer having a syndiotactic configuration, and an ion-exchange group-containing thermoplastic resin other than the styrenic polymer having a syndiotactic configuration.

7. The polyelectrolyte according to claim 6, further comprising an ion-exchange group-free thermoplastic resin.

8. The polyelectrolyte according to any one of claims 2, 4 and 6, wherein said ion-exchange group is a sulfonic group.

9. A polyelectrolyte membrane produced by forming the polyelectrolyte according to claim 1 into a film.

10. The polyelectrolyte membrane according to claim 9, wherein said polyelectrolyte membrane has an ion-exchange capacity of 0.65 milli-equivalent/g or more on the basis of weight of dried membrane.

11. A polyelectrolyte membrane according to claim 9, wherein said polyelectrolyte membrane is produced by forming the polyelectrolyte into a film by a melt-press method or a melt-extrusion method.

12. A fuel cell comprising the polyelectrolyte membrane according to claim 9.

## INTERNATIONAL SEARCH REPORT

| International application No. |
| --- |
| PCT/JP01/01023 |

A. CLASSIFICATION OF SUBJECT MATTER
　　　　Int.Cl$^7$ C08F8/34, H01B1/06, H01M8/02

According to International Patent Classification (IPC) or to both national classification and IPC

B. FIELDS SEARCHED

Minimum documentation searched (classification system followed by classification symbols)
　　　　Int.Cl$^7$ C08F8/34, H01B1/06, H01M8/02

Documentation searched other than minimum documentation to the extent that such documents are included in the fields searched

Electronic data base consulted during the international search (name of data base and, where practicable, search terms used)
　　WPI(L)

C. DOCUMENTS CONSIDERED TO BE RELEVANT

| Category* | Citation of document, with indication, where appropriate, of the relevant passages | Relevant to claim No. |
| --- | --- | --- |
| Y | JP, 5-295161, A (Idemitsu Kosan Co., Ltd.), 09 November, 1993 (09.11.93) Claims; Par. No. [0061] (Family: none) | 1-12 |
| Y | JP, 10-195134, A (Sony Corporation), 28 July, 1998 (28.07.98) Claims; Par. No. [0007] (Family: none) | 1-12 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 01 May, 2001 (01.05.01) | Date of mailing of the international search report 22 May, 2001 (22.05.01) |
| --- | --- |
| Name and mailing address of the ISA/ 　　Japanese Patent Office | Authorized officer |
| Facsimile No. | Telephone No. |

Form PCT/ISA/210 (second sheet) (July 1992)